# FASCICULE DE BREVET EUROPEEN

(11) **EP 2 709 792 B1**
(45) Date de publication et mention de la délivrance du brevet: **08.07.2015**
(21) Numéro de dépôt: 12722343.6
(22) Date de dépôt: 16.05.2012
(51) Int. Cl.: B23K 26/34, B22F 3/105, B29D 30/06, B29C 67/00

(54) **PROCEDE DE FABRICATION D'UN ELEMENT MOULANT PAR FRITTAGE AVEC UNE PARTIE NON FRITTEE ENTIEREMENT PLANE ; ELEMENT MOULANT CORRESPONDANT**
VERFAHREN ZUR HERSTELLUNG EINES FORMELEMENT DURCH SINTERUNG MIT PLANAREN UNFRITTED TEIL, UND ENTSPRECHENDES FORMELEMENT
METHOD FOR MANUFACTURING A MOLDING ELEMENT BY FRITTING WITH A COMPLETELY PLANAR UNFRITTED PORTION, AND CORRESPONDING MOLDING ELEMENT

(30) Priorité: 17.05.2011 FR 1154252
(43) Date de publication de la demande: 26.03.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BONNET, Daniel, F-63040 Clermont-Ferrand Cedex 9 (FR)
(74) Mandataire: Demaure, Pierre-Yves
(86) Numéro de dépôt international: PCT/EP2012/059107
(87) Numéro de publication internationale: WO 2012/156439

(56) Documents cités:
- DE-A1-102004 028 462
- US-A- 5 753 274
- US-A1- 2002 020 164
- US-A1- 2005 112 230

## Description

La présente invention concerne un procédé de fabrication d'un élément moulant pour un moule pour pneumatiques et un élément moulant pour un moule pour pneumatique conformément au préamble des revendications 1 et 8 (voir, par example DE 10 2004 028 462 A), notamment un moule de type à secteurs.

### ETAT DE LA TECHNIQUE

Un moule à secteurs comprend plusieurs pièces séparées qui, par rapprochement relatif, délimitent un espace de moulage globalement toroïdal. En particulier, un moule à secteurs comporte deux coquilles latérales pour le moulage des flancs du pneumatique et plusieurs secteurs périphériques situés entre les coquilles pour le moulage de la bande de roulement du pneumatique. Le rapprochement de toutes ces pièces est assuré par une cinématique adaptée grâce à un mécanisme déterminé.

Pour mouler la bande de roulement, les secteurs de moule comprennent des éléments moulants. Par élément moulant, on entend tout élément du moule qui comporte une surface de moulage permettant de mouler une partie de la bande de roulement d'un pneumatique. Un élément moulant peut être ainsi un bloc assemblé sur un secteur du moule ou une protubérance, telle qu'une lamelle ou un cordon, rapportée sur la surface radialement intérieure du moule.

Il est possible de réaliser un élément moulant par un procédé de fusion sélective plus communément nommé frittage. Ce procédé utilise un faisceau énergétique pour fusionner une poudre métallique. Par « faisceau énergétique », on entend un rayonnement électromagnétique (par exemple un faisceau laser) ou un faisceau de particules (par exemple un faisceau d'électrons).

Un procédé de frittage utilisant un laser, ci-après dénommé procédé de frittage laser, est connu du document EP1641580. Dans ce document, une première couche de poudre métallique est étalée sur un plateau. Tout ou partie des grains de cette première couche de poudre sont ensuite agglomérés par le faisceau d'un laser en fonction de la forme de l'objet que l'on souhaite obtenir. Une fois cette étape effectuée une deuxième couche de poudre est étalée sur la première couche de poudre pour être à son tour fusionnée sélectivement par laser. En répétant ces opérations d'étalement de couche et de fusion par laser, on construit couche par couche un objet fritté.

La fusion laser génère des dilatations thermiques dans l'objet fritté ce qui provoque l'apparition de contraintes après un retour à la température ambiante. Lors de la désolidarisation de l'objet fritté du plateau support, par exemple au cours d'une découpe rapide à l'aide d'un fil, des contraintes occasionnent des déformations de l'objet fritté. Ces déformations sont d'autant plus importantes lorsque la pièce frittée est une pièce pleine.

Pour limiter ces déformations, le document WO 2010/076503 divulgue un élément moulant réalisé par frittage laser présentant un agencement interne particulier. L'élément moulant comprend ainsi une coque fine délimitant un volume intérieur et un noyau interne à la coque. La coque est pleine et le noyau interne présente une structure maillée comportant une pluralité de cavités. Pour améliorer la conductivité thermique de l'élément moulant, les cavités du noyau sont remplies de poudre métallique non fusionnée.

Bien que l'élément moulant du document WO 2010/076503 présente une déformation moindre lors de sa désolidarisation d'un plateau support, il existe toujours des concentrations de contraintes au niveau de la coque. La désolidarisation de l'élément moulant du plateau support entraîne alors des déformations plus ou moins importantes de la coque et dans certains cas extrêmes de déformation, des fissures peuvent apparaître dans cette coque. Il est ainsi possible que de la poudre non fusionnée s'échappe par ces fissures entraînant alors un risque de pollution des outillages et donc des pneumatiques moulés ainsi qu'un risque d'inhalation de cette poudre par un opérateur manipulant l'élément moulant.

Le document DE102004028462A divulgue un élément moulant comportant une partie frittée et une partie non frittée solidarisée avec cette partie frittée. La partie non frittée présente une surface de jonction avec la partie frittée non entièrement plane ce qui empêche l'utilisation du procédé de frittage tel que divulgué dans le document EP1641580.

Il existe donc un besoin de proposer un procédé de fabrication d'un élément moulant par frittage laser qui soit simple et économique et qui garantit une déformation limitée de cet élément moulant après sa fabrication et une grande sécurité vis-à-vis de la poudre non fusionnée présente dans l'élément moulant.

### RESUME DE L'INVENTION

L'invention concerne un procédé de fabrication d'un élément moulant d'un moule pour pneumatique tel que défini dans la revendication 1. L'élément moulant comporte une partie frittée et une partie non frittée solidaire de la partie frittée. La partie frittée comprend une coque et un noyau interne à la coque venu de matière avec ladite coque. Le noyau comporte une structure maillée comprenant une pluralité de cavités. Le procédé de fabrication comporte une étape de fabrication de la partie frittée de l'élément moulant à partir d'une poudre métallique déposée sur une surface entièrement plane d'un plateau support et fusionnée couche par couche, la partie frittée étant solidarisée avec le plateau support par de la poudre métallique fusionnée. Le procédé comporte également une étape d'usinage du plateau support pour former la partie non frittée de l'élément moulant.

L'invention propose ainsi de fabriquer un élément moulant en deux étapes distinctes.

La première étape consiste à former la surface moulante de l'élément moulant c'est-à-dire la surface destinée à mouler une partie de la bande de roulement du pneumatique. Cette première étape est réalisée par frittage laser, ce qui permet de réaliser des pièces complexes.

La seconde étape consiste à former une embase pour le positionnement de l'élément moulant dans le moule. Cette embase ne présente pas une forme particulièrement difficile à réaliser. Elle peut donc être usinée dans le plateau support par un procédé classique tel que le fraisage, le tournage ou la rectification.

Le procédé de fabrication de l'élément moulant ne comporte pas d'étape de désolidarisation entre la partie frittée comprenant la surface moulante et la partie non frittée formant l'embase. La partie frittée de l'élément moulant reste ainsi solidaire de la partie non frittée de cet élément et la jonction entre ces deux parties est obtenue par de la poudre métallique fusionnée. La partie non frittée de l'élément moulant vient alors renforcer la rigidité de la partie frittée. L'élément moulant présente ainsi un faible risque de déformation après fabrication ce qui garantit une bonne étanchéité de la coque.

De manière préférentielle, la poudre est fusionnée par des moyens laser.

De manière préférentielle, on usine le plateau support de sorte que la partie non frittée formée par cet usinage constitue une embase sur laquelle repose entièrement la partie frittée de l'élément moulant.

Ainsi, il est possible que le noyau interne repose directement sur l'embase sans avoir besoin de prévoir une partie de coque entre ce noyau interne et cette embase. On améliore ainsi le temps de fabrication de la partie frittée. En outre, l'embase vient délimiter le noyau interne dans sa partie basse et vient éviter que de la poudre non fusionnée ne s'échappe de ce noyau.

Dans une variante de réalisation, l'étape de fabrication de la partie non frittée crée une jonction entre la partie frittée et le plateau support. La partie non frittée usinée à partir de ce plateau support et la partie frittée de l'élément moulant se rejoignent exactement au niveau de cette jonction.

Il existe ainsi une continuité de surface entre la surface externe de la partie frittée et la surface externe de la partie non frittée au niveau de la jonction entre ces deux parties. La pièce présente alors un aspect globalement uniforme.

De manière préférentielle, au cours de l'étape de fabrication de la partie frittée on forme une paroi de poudre métallique fusionnée s'étendant dans toute l'épaisseur de la partie frittée. Cette paroi est apte à délimiter un conduit isolé des cavités du noyau. Suite à l'étape de fabrication de la partie frittée, on perce un trou dans la partie non frittée en regard du conduit présent dans la partie frittée. Le trou prolonge alors le conduit de sorte à former un évent dans l'élément moulant.

On fabrique ainsi d'une manière simple et pratique un évent dans l'élément moulant sans devoir percer la coque. En effet, le conduit présent dans la partie frittée est formé couche par couche en même temps que cette partie frittée. Le conduit est ainsi délimité par une paroi qui l'isole des cavités appartenant au noyau. Aucune poudre métallique non fusionnée présente dans les cavités ne peut donc s'échapper par ce conduit. En outre, il est possible d'utiliser le conduit comme un moyen de guidage d'un moyen de perçage, par exemple un foret, pour venir percer un trou dans la partie non frittée. On s'assure ainsi que le trou formé est bien dans le prolongement du conduit de sorte à optimiser la capacité d'évacuation de l'air par l'évent.

De manière préférentielle, le procédé comporte une étape d'assemblage de l'élément moulant avec un autre élément moulant.

Pour des raisons de coût, les plateaux supports à partir desquels les éléments moulants sont réalisés ont des dimensions normalisées. Pour fabriquer des pneumatiques de grande taille, les éléments moulants doivent être dimensionnés en conséquence. Or les dimensions de tels éléments moulants peuvent être bien supérieures aux dimensions des plateaux supports utilisés. Grâce à l'invention, il est possible de fabriquer différents sous-éléments moulants dont les dimensions sont adaptées aux plateaux supports utilisés. Ces sous-éléments moulants sont ensuite assemblés pour former un élément moulant complet adapté au moulage de pneumatiques de grande taille.

De manière préférentielle, le procédé comporte une étape d'usinage d'une pluralité de stries sur la surface plane du plateau support, lesdites stries étant parallèles entre elles et régulièrement réparties sur ladite surface plane.

Les stries forment des zones de stockage de poudre, ce qui améliore la répartition de cette poudre sur le plateau support. On facilite ainsi l'obtention de couches de poudre d'épaisseur constante.

Un autre objet de l'invention concerne un élément moulant tel que défini dans la revendication 8. L'élément moulant comporte ainsi une partie frittée fabriquée à partir d'une poudre métallique fusionnée couche par couche. La partie frittée comprend une coque et un noyau interne à la coque venu de matière avec la coque. Le noyau comporte en outre une structure maillée comprenant une pluralité de cavités. Dans l'invention, l'élément moulant comporte une partie non frittée solidarisée avec la partie frittée de l'élément moulant par de la poudre métallique fusionnée. La jonction entre la partie frittée et la partie non frittée de l'élément moulant est entièrement plane.

De manière préférentielle, la partie non frittée constitue une embase sur laquelle repose entièrement la partie frittée de l'élément moulant.

De manière préférentielle, la partie non frittée et la partie frittée se rejoignent exactement au niveau de leur jonction.

De manière préférentielle, l'élément moulant comporte au moins un évent. L'évent comprend un conduit formé par frittage avec la partie frittée de l'élément moulant, ce conduit étant isolé des cavités du noyau par une paroi de poudre métallique fusionnée. L'évent comprend en outre un trou appartenant à la partie non frittée de l'élément moulant, ce trou prolongeant le conduit.

De manière préférentielle, l'élément moulant est formé par l'assemblage d'au moins deux portions d'éléments moulants préalablement fabriquées selon le procédé de fabrication tel que décrit ci-dessus.

Un autre objet de l'invention concerne un moule pour le moulage et la vulcanisation d'un pneumatique. Ce moule comporte au moins un élément moulant tel que décrit ci-dessus.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** est une vue en perspective d'un élément de moulant selon l'invention ;
- la **figure 2** représente schématiquement une vue en coupe de l'élément moulant de la figure 1 ;
- la **figure 3** représente schématique une vue en coupe de l'élément moulant selon la ligne I-I de la **figure 2** **;**
- les **figures 4A, 4B**, **4C, 4D, 4E** représentent différentes étapes d'un procédé de fabrication de l'élément moulant de la figure 1 ;
- la **figure 5** représente un plateau support sur lequel on a fritté une pluralité d'éléments moulants ;
- la **figure 6** représente un élément moulant formé par l'assemblage de deux ½ éléments moulants préalablement fabriqués selon le procédé de fabrication des **figures 4A** à **4E****.**

Dans la description qui va suivre, des éléments sensiblement identiques ou similaires seront désignés par des références identiques.

Dans la présente description, l'invention est décrite dans le cas où l'élément moulant est un bloc d'un secteur de moule. Toutefois, on notera d'emblée que l'invention n'est pas limitée à cet exemple particulier et peut notamment s'appliquer au cas où l'élément moulant est une protubérance, telle qu'une lamelle ou un cordon, rapportée sur la surface radialement intérieure d'un moule.

De la même manière, l'invention est décrite ici dans le cas où le faisceau énergétique utilisé pour fritter la poudre est un faisceau laser. Bien entendu, il est possible d'utiliser un tout autre faisceau énergétique tel qu'un faisceau d'électrons.

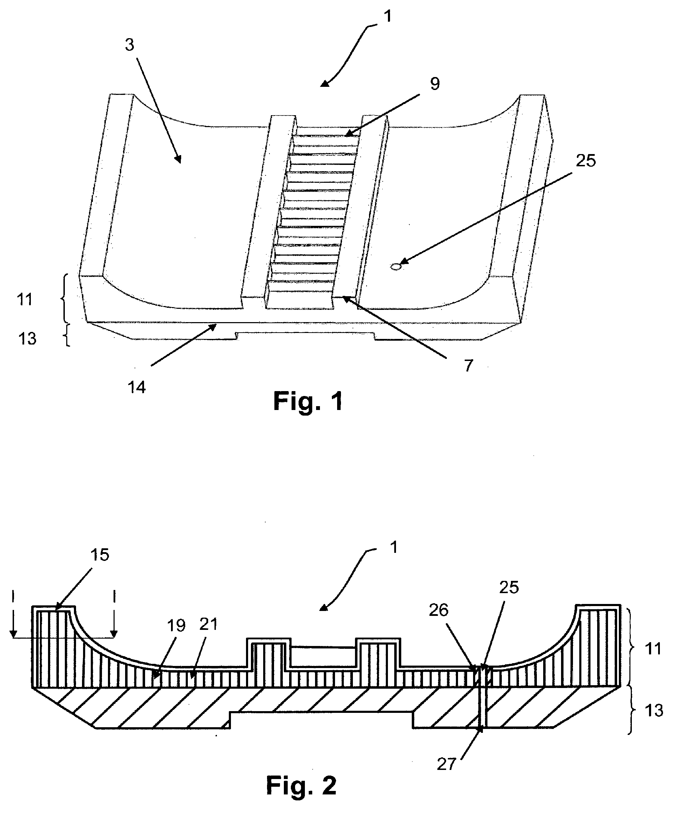

On a représenté sur la **figure 1** un bloc, désigné par la référence générale 1, d'un moule à secteurs destiné à vulcaniser un pneumatique.

Le bloc 1 comprend une surface de moulage 3 apte à mouler une partie de la bande de roulement du pneumatique.

Plus particulièrement, la surface de moulage 3 comprend une pluralité de protubérances 7, 9, dont le nombre a été limité ici pour faciliter la compréhension de la figure 1. On distingue ainsi sur cette figure 1 deux cordons 7 et des lamelles 9. Les cordons 7 sont destinés à mouler des rainures dans la bande de roulement c'est-à-dire des découpures dont la largeur est supérieure ou égale à 2 mm. Les lamelles 9 sont destinées à mouler des incisions dans la bande de roulement, c'est-à-dire des découpures dont la largeur est inférieure à 2 mm.

Le bloc 1 est composé d'une partie supérieure 11 comprenant la surface de moulage 3 et d'une partie inférieure 13 formant une embase pour le positionnement de l'élément moulant dans le moule. La partie supérieure 11 et la partie inférieure 13 du bloc se raccordent selon un plan de jonction. Vue de côté, le plan de jonction forme une ligne de jonction 14 entièrement rectiligne.

Plus particulièrement, la partie supérieure 11 est réalisée par frittage laser à partir d'une poudre métallique fusionnée couche par couche par des moyens laser. La partie inférieure 13 est une pièce massive qui vient renforcer la rigidité de la partie supérieure 11. Afin d'assurer une bonne jonction entre les parties 11, 13 de l'élément moulant, la partie inférieure 13 est fabriquée dans un matériau compatible avec la poudre métallique utilisée pour fabriquer la partie supérieure 11. Ce matériau est par exemple de l'acier.

On a représenté sur **la** **figure 2****,** une vue en coupe du bloc 1 de la figure 1. Sur cette vue en coupe, on distingue l'agencement interne de la partie supérieure 11. La partie supérieure 11 comprend ainsi une coque fine 15 et un noyau interne à la coque. La coque 15 est ici pleine et présente une épaisseur comprise entre 0,25 et 2 millimètres. La coque 15 possède ainsi une rigidité suffisante pour être utilisée dans un moule de vulcanisation pour pneumatique.

Par « coque pleine », on entend que la coque 15 n'est formée que par de la poudre métallique entièrement fusionnée.

Le noyau interne à la coque 15 présente une structure non pleine. Plus particulièrement, le noyau comporte une structure maillée comprenant une pluralité de cloisons 19 délimitant des cavités 21. Les cloisons 19 sont formées par de la poudre agglomérée par fusion laser. Les cavités 21 comprennent de la poudre non fusionnée.

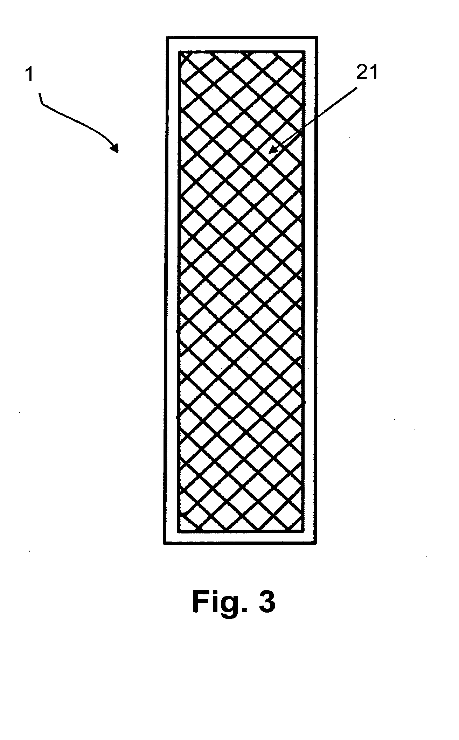

A titre d'illustration, la **figure 3** présente une structure maillée dans laquelle la section des cavités 21 a une forme en carré et la longueur des côtés des cavités est comprise entre 0,1 et 2 mm. D'autres formes peuvent être envisagées, par exemple la section des cavités peut être en triangle, en rectangle ou en nid d'abeille.

On notera que l'utilisation d'une structure maillée permet de gagner du temps dans la fabrication de l'élément moulant puisqu'il n'est pas nécessaire de fusionner toute la poudre métallique du noyau. Les cloisons du noyau sont ainsi dimensionnées de sorte que le noyau soit suffisamment résistant aux contraintes mécaniques liées au moulage du pneumatique. A titre d'exemple, l'épaisseur des cloisons est comprise entre 0,1 et 0,2 mm.

Comme il a déjà été précisé, de la poudre non fusionnée est présente dans les cavités 21. La présence de cette poudre non fusionnée permet d'améliorer la conductivité thermique de l'élément moulant, ce qui améliore le chauffage de l'ébauche crue du pneumatique au cours de l'opération de vulcanisation.

Le bloc 1 de la **figure 2** comprend également au moins un évent comportant un conduit 25 et un trou 27.

Le conduit 25 s'étend dans la partie supérieure 11 de l'élément moulant et débouche sur la coque 15. Une paroi 26 isole le conduit 25 des cavités 21 du noyau. Cette paroi 26 s'étend dans toute l'épaisseur de la partie supérieure 11.

Le trou 27 prolonge le conduit 25 dans la partie inférieure 13 de l'élément moulant. Ce trou 27 débouche sur une surface externe de la partie inférieure 13.

L'évent permet ainsi d'évacuer l'air à l'extérieur du moule.

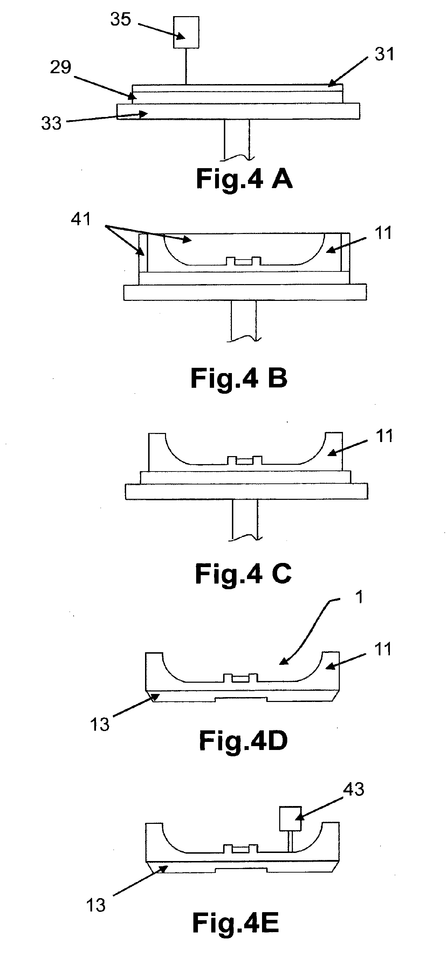

Les **figures 4A, 4B, 4C, 4D, 4E** représentent différentes étapes d'un procédé de fabrication du bloc 1.

Dans une première étape visible à la **figure 4A****,** on étale sur un plateau support 29 une première couche 31 de poudre métallique. Le plateau support 29 présente ici une forme globalement parallélépipédique comportant une surface plane sur laquelle est étalée la poudre. Le plateau support 29 repose sur un plateau de référence 33 appartenant à la machine de fabrication.

Dans cette première étape, tout ou partie des grains de la première couche sont agglomérés par des moyens lasers 35 en fonction de la forme que l'on souhaite donner à la partie supérieure 11 du bloc 1. Ces moyens lasers 35 comprennent un laser apte à générer un faisceau laser pour fusionner la poudre ainsi qu'un ordinateur (non représenté sur la **figure 4A****)** pilotant le laser. L'ordinateur comprend par exemple une modélisation de la partie supérieure 11 du bloc 1.

En répétant ces opérations d'étalement de couche et de fusion par laser, on obtient un ensemble de poudre, visible à la **figure 4B****,** comprenant de la poudre fusionnée formant la partie supérieure 11 du bloc 1 et de la poudre non fusionnée 41 recouvrant partiellement ou en totalité cette partie supérieure 11.

Dans une étape visible à la **figure 4C****,** on vient évacuer la poudre non fusionnée 41 pour dégager la partie supérieure 11 du bloc 1.

Dans une étape visible à **la** **figure 4D****,** on vient usiner le plateau support 29 pour former la partie inférieure 13 du bloc 1. Le plateau support 29 est usiné de sorte que la partie inférieure 13 prolonge entièrement la partie supérieure 11. Le bloc 1 présente ainsi une unité de forme.

Dans une étape visible à **la** **figure 4E****,** on vient percer la partie inférieure 13 du bloc par des moyens de perçage 43 de sorte à former au moins un évent dans le bloc.

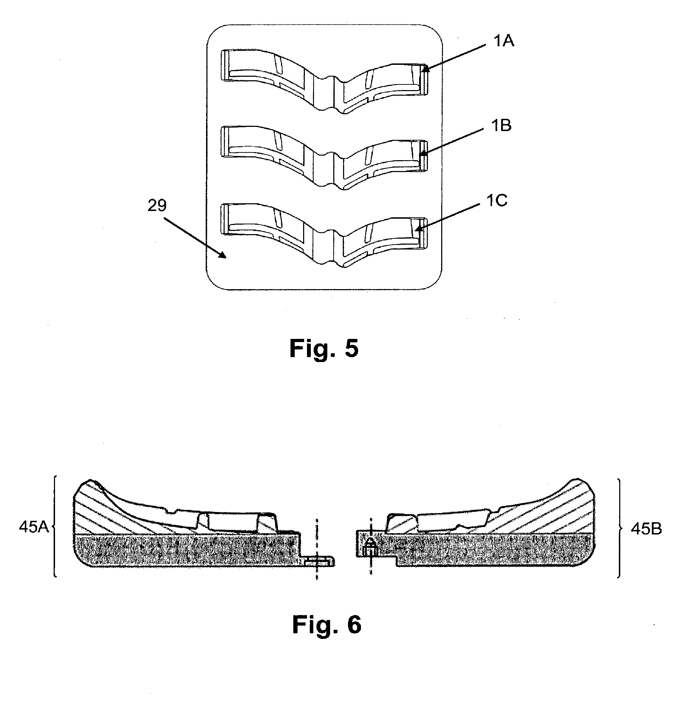

On notera que les **figures 4A** à **4E** décrivent la fabrication d'un seul bloc sur un seul plateau support. Bien entendu, il est possible de former plusieurs parties frittées de plusieurs blocs 1A, 1B, 1C sur un même plateau support 29, tel que cela est représenté à la **figure 5****.**

L'invention n'est pas limitée aux exemples décrits et représentés et diverses modifications peuvent y être apportées sans sortir de son cadre.

En particulier, il est possible d'utiliser une structure maillée plus complexe pour le noyau de l'élément moulant. Par exemple, il est possible de rajouter un réseau de poutres entre les cloisons du noyau de sorte à renforcer la structure de ce noyau.

Dans l'exemple de la **figure 2****,** le noyau est directement solidaire de la partie inférieure 13. En variante, la coque 15 se prolonge entre le noyau et la partie inférieure 13. La coque 15 enferme alors complètement le noyau.

Dans une variante de réalisation, le procédé de fabrication du bloc 1 comprend préalablement à l'étape de fabrication de la partie frittée, une étape d'usinage d'une pluralité de stries sur la surface plane du plateau support. Les stries sont parallèles entre elles et régulièrement réparties sur cette surface plane. A titre d'exemple, les stries ont une profondeur comprise entre 2 et 4 microns et le pas entre les stries est compris entre 1 et 50 microns. L'usinage des stries est, par exemple, réalisé à l'aide d'une meule abrasive. On notera que les stries ont une très faible profondeur au regard des dimensions de la surface du plateau sur laquelle on vient déposer de la poudre, de sorte que malgré la présence de ces stries on considère que la surface du plateau support est plane.

Dans une variante de réalisation visible à la **figure 6****,** le bloc 1 est constitué par l'assemblage de plusieurs portions de bloc 45A, 45B. Chaque portion de bloc comprend une partie frittée (partie hachurée sur **la** **figure 6****)** et une partie non frittée (partie grisée sur **la** **figure 6****).** L'assemblage de ces portions de bloc est ici réalisé par vissage à l'aide de moyens d'assemblage (non représentés ici). En variante, l'assemblage de ces portions de bloc est réalisé par collage, par soudure ou par tout autre moyen.

## Revendications

1. Procédé de fabrication d'un élément moulant pour un moule pour pneumatique, ledit élément moulant comportant une partie frittée (11) et une partie non frittée (13) solidaire de la partie frittée, **caractérisé en ce que** la partie frittée comprenant une coque (15) et un noyau interne à la coque venu de matière avec ladite coque, ledit noyau comportant une structure maillée comprenant une pluralité de cavités (21), et **en ce que** ledit procédé comportant les étapes suivantes :
- une étape de fabrication de la partie frittée de l'élément moulant à partir d'une poudre métallique (31) déposée sur une surface entièrement plane d'un plateau support non fritté (29), ladite poudre étant fusionnée couche par couche, ladite partie frittée étant solidarisée avec ledit plateau support par de la poudre métallique fusionnée ;
- une étape d'usinage du plateau support pour former la partie non frittée (13) de l'élément moulant,

2. Procédé de fabrication selon la revendication 1, **caractérisé en ce que** la poudre est fusionnée par des moyens laser (35).

3. Procédé de fabrication selon l'une quelconque des revendications 1 ou 2, **caractérisé en ce que** l'on usine le plateau support de sorte que la partie non frittée formée par cet usinage constitue une embase sur laquelle repose entièrement la partie frittée de l'élément moulant.

4. Procédé de fabrication selon la revendication 3, l'étape de fabrication de la partie non frittée créant une jonction entre la partie frittée et le plateau support, **caractérisé en ce que** la partie non frittée usinée à partir de ce plateau support et la partie frittée de l'élément moulant se rejoignent exactement au niveau de cette jonction.

5. Procédé de fabrication selon l'une quelconque des revendications 1 à 4, **caractérisé en ce que** au cours de l'étape de fabrication de la partie frittée (11) on forme une paroi (26) de poudre métallique fusionnée s'étendant dans toute l'épaisseur de la partie frittée, ladite paroi (26) étant apte à délimiter un conduit (25) isolé des cavités (21) du noyau, et **en ce que** suite à l'étape de fabrication de la partie frittée on perce un trou (27) dans la partie non frittée (13) en regard du conduit présent dans la partie frittée, ledit trou prolongeant ledit conduit (25) de sorte à former un évent dans l'élément moulant.

6. Procédé de fabrication selon l'une quelconque des revendications 1 à 5, **caractérisé en ce que** le procédé comporte une étape d'assemblage de l'élément moulant avec un autre élément moulant.

7. Procédé de fabrication selon l'une quelconque des revendications 1 à 6, **caractérisé en ce que** préalablement à l'étape de fabrication de la partie frittée, le procédé comporte une étape d'usinage d'une pluralité de stries sur la surface plane du plateau support (29), lesdites stries étant parallèles entre elles et régulièrement réparties sur ladite surface plane.

8. Elément moulant pour un moule pour pneumatique comportant une partie frittée (11) fabriquée à partir d'une poudre métallique fusionnée couche par couche, **caractérisé en ce que** ladite partie frittée comprenant une coque (15) et un noyau interne à la coque venu de matière avec ladite coque, ledit noyau comportant une structure maillée comprenant une pluralité de cavités (21) **en ce que** l'élément moulant comporte une partie non frittée (13) solidarisée avec la partie frittée (11) de l'élément moulant par de la poudre métallique fusionnée et **en ce que** la jonction entre la partie frittée (11) et la partie non frittée (13) de l'élément moulant est entièrement plane.

9. Elément moulant selon la revendication 8 **caractérisé en ce que** la partie non frittée constitue une embase sur laquelle repose entièrement la partie frittée de l'élément moulant.

10. Elément moulant selon la revendication 9 **caractérisé en ce que** la partie non frittée et la partie frittée se rejoignent exactement au niveau de leur jonction.

11. Elément moulant selon l'une quelconque des revendications 8 à 10 **caractérisé en ce que** ledit élément moulant comporte au moins un évent, ledit évent comprenant un conduit (25) formé par frittage avec la partie frittée (11) de l'élément moulant et un trou (27) appartenant à la partie non frittée (13) de l'élément moulant et prolongeant le conduit, le conduit (25) de l'évent étant isolé des cavités (21) du noyau par une paroi (26) de poudre métallique fusionnée.

12. Elément moulant selon l'une quelconque des revendications 8 à 11 **caractérisé en ce que** l'élément moulant est formé par l'assemblage d'au moins deux portions d'éléments moulants préalablement fabriquées selon l'une quelconque des revendications 1 à 7.

13. Moule pour la vulcanisation et le moulage d'un pneumatique, ledit moule comportant au moins un élément moulant selon l'une quelconque des revendications 8 à 12.

## Patentansprüche

1. Verfahren zur Fertigung eines Formgebungselements für eine Form für einen Luftreifen, wobei das Formgebungselement einen gesinterten Teil (11) und einen fest mit dem gesinterten Teil verbundenen nicht gesinterten Teil (13) aufweist, **dadurch gekennzeichnet, dass** der gesinterte Teil eine Schale (15) und einen innerhalb der Schale befindlichen Kern enthält, der aus einem Stück mit der Schale besteht, wobei der Kern eine Gitterstruktur aufweist, die eine Vielzahl von Hohlräumen (21) enthält, und dass das Verfahren die folgenden Schritte aufweist :
- einen Schritt der Fertigung des gesinterten Teils des Formgebungselements ausgehend von einem Metallpulver (31), das auf eine vollständig ebene Fläche einer nicht gesinterten Tragplatte (29) aufgebracht wird, wobei das Pulver Schicht für Schicht geschmolzen wird, wobei der gesinterte Teil durch geschmolzenes Metallpulver fest mit der Tragplatte verbunden wird ;
- einen Schritt der Bearbeitung der Tragplatte, um den nicht gesinterten Teil (13) des Formgebungselements zu formen.

2. Fertigungsverfahren nach Anspruch 1, **dadurch gekennzeichnet, dass** das Pulver durch Lasereinrichtungen (35) geschmolzen wird.

3. Fertigungsverfahren nach einem der Ansprüche 1 oder 2, **dadurch gekennzeichnet, dass** die Tragplatte so bearbeitet wird, dass der durch diese Bearbeitung geformte nicht gesinterte Teil eine Grundplatte bildet, auf der der gesinterte Teil des Formgebungselements vollständig aufliegt.

4. Fertigungsverfahren nach Anspruch 3, wobei der Fertigungsschritt des nicht gesinterten Teils eine Verbindung zwischen dem gesinterten Teil und der Tragplatte erzeugt, **dadurch gekennzeichnet, dass** der ausgehend von dieser Tragplatte hergestellte nicht gesinterte Teil und der gesinterte Teil des Formgebungselements sich genau im Bereich dieser Verbindung vereinen.

5. Fertigungsverfahren nach einem der Ansprüche 1 bis 4, **dadurch gekennzeichnet, dass** während des Fertigungsschritts des gesinterten Teils (11) eine Wand (26) aus geschmolzenem Metallpulver geformt wird, die sich in der ganzen Dicke des gesinterten Teils erstreckt, wobei die Wand (26) einen von den Hohlräumen (21) des Kerns isolierten Kanal (25) begrenzen kann, und dass nach dem Fertigungsschritt des gesinterten Teils ein Loch (27) in den nicht gesinterten Teil (13) gegenüber dem im gesinterten Teil vorhandenen Kanal gebohrt wird, wobei das Loch den Kanal (25) verlängert, um ein Entlüftungsloch im Formgebungselement zu formen.

6. Fertigungsverfahren nach einem der Ansprüche 1 bis 5, **dadurch gekennzeichnet, dass** das Verfahren einen Schritt der Zusammenfügung des Formgebungselements mit einem anderen Formgebungselement aufweist.

7. Fertigungsverfahren nach einem der Ansprüche 1 bis 6, **dadurch gekennzeichnet, dass** das Verfahren vor dem Fertigungsschritt des gesinterten Teils einen Schritt der Einarbeitung einer Vielzahl von Riefen auf der ebenen Fläche der Tragplatte (29) aufweist, wobei die Riefen zueinander parallel und gleichmäßig auf der ebenen Fläche verteilt sind.

8. Formgebungselement für eine Form für einen Luftreifen, das einen gesinterten Teil (11) aufweist, der ausgehend von einem Schicht für Schicht geschmolzenen Metallpulver angefertigt wird, **dadurch gekennzeichnet, dass** der gesinterte Teil eine Schale (15) und einen Kern innerhalb der Schale aufweist, der aus einem Stück mit der Schale besteht, wobei der Kern eine Gitterstruktur aufweist, die eine Vielzahl von Hohlräumen (21) enthält, dass das Formgebungselement einen nicht gesinterten Teil (13) aufweist, der durch geschmolzenes Metallpulver fest mit dem gesinterten Teil (11) des Formgebungselements verbunden wird, und dass die Verbindung zwischen dem gesinterten Teil (11) und dem nicht gesinterten Teil (13) des Formgebungselements vollständig eben ist.

9. Formgebungselement nach Anspruch 8, **dadurch gekennzeichnet, dass** der nicht gesinterte Teil eine Grundplatte bildet, auf der der gesinterte Teil des Formgebungselements vollständig aufliegt.

10. Formgebungselement nach Anspruch 9, **dadurch gekennzeichnet, dass** der nicht gesinterte Teil und der gesinterte Teil sich genau im Bereich ihrer Verbindung vereinen.

11. Formgebungselement nach einem der Ansprüche 8 bis 10, **dadurch gekennzeichnet, dass** das Formgebungselement mindestens ein Entlüftungsloch aufweist, wobei das Entlüftungsloch einen Kanal (25), der durch Sintern mit dem gesinterten Teil (11) des Formgebungselements geformt wird, und ein Loch (27) enthält, das zum nicht gesinterten Teil (13) des Formgebungselements gehört und den Kanal verlängert, wobei der Kanal (25) des Entlüftungslochs von den Hohlräumen (21) des Kerns durch eine Wand (26) aus geschmolzenem Metallpulver isoliert wird.

12. Formgebungselement nach einem der Ansprüche 8 bis 11, **dadurch gekennzeichnet, dass** das Formgebungselement durch die Zusammenfügung von mindestens zwei Abschnitten von Formgebungselementen geformt wird, die nach einem der Ansprüche 1 bis 7 im Voraus angefertigt werden.

13. Form für die Vulkanisierung und das Formen eines Luftreifens, wobei die Form mindestens ein Formgebungselement nach einem der Ansprüche 8 bis 12 aufweist.

## Claims

1. Method of manufacturing a moulding element for a tyre mould, the said moulding element comprising a sintered part (11) and a non-sintered part (13) attached to the sintered part, **characterized in that** the sintered part comprises a shell (15) and a core internal to the shell and formed as one piece with the said shell, the said core comprising a meshed structure comprising a plurality of cavities (21), and **in that** the said method involves the following steps:
- a step of manufacturing the sintered part of the moulding element from a metallic powder (31) deposited on a completely flat surface of a non-sintered support plate (29), the said powder being fused layer by layer, the said sintered part being attached to the said support plate by fused metallic powder;
- a step of machining the support plate to form the non-sintered part (13) of the moulding element.

2. Method of manufacture according to Claim 1, **characterized in that** the powder is fused by laser means (35).

3. Method of manufacture according to either one of Claims 1 or 2, **characterized in that** the support plate is machined in such a way that the non-sintered part formed by this machining constitutes a base on which the sintered part of the moulding element rests completely.

4. Method of manufacture according to Claim 3, the step of manufacturing the non-sintered part creating a junction between the sintered part and the support plate, **characterized in that** the non-sintered part machined from this support plate and the sintered part of the moulding element come together exactly at this junction.

5. Method of manufacture according to any one of Claims 1 to 4, **characterized in that** during the step of manufacturing the sintered part (11) a wall (26) of fused metallic powder is formed, extending throughout the entire thickness of the sintered part, the said wall (26) being able to delimit a passage (25) isolated from the cavities (21) of the core, and **in that** following the step of manufacturing the sintered part, a hole (27) is pierced in the non-sintered part (13) opposite the passage present in the sintered part, the said hole extending the said passage (25) so as to form a vent in the moulding element.

6. Method of manufacture according to any one of Claims 1 to 5, **characterized in that** the method comprises a step of assembling the moulding element with another moulding element.

7. Method of manufacture according to any one of Claims 1 to 6, **characterized in that** prior to the step of manufacturing the sintered part, the method involves a step of machining a plurality of striations on the flat surface of the support plate (29), the said striations being mutually parallel and evenly distributed over the said flat surface.

8. Moulding element for a tyre mould comprising a sintered part (11) manufactured from a metallic powder that has been fused layer by layer, **characterized in that** the said sintered part comprises a shell (15) and a core internal to the shell and formed as one piece with the said shell, the said core comprising a meshed structure comprising a plurality of cavities (21), **in that** the moulding element comprises a non-sintered part (13) attached to the sintered part (11) of the moulding element by fused metallic powder, and **in that** the junction between the sintered part (11) and the non-sintered part (13) of the moulding element is completely flat.

9. Moulding element according to Claim 8, **characterized in that** the non-sintered part constitutes a base on which the sintered part of the moulding element rests completely.

10. Moulding element according to Claim 9, **characterized in that** the non-sintered part and the sintered part come together exactly at their junction.

11. Moulding element according to any one of Claims 8 to 10, **characterized in that** the said moulding element comprises at least one vent, the said vent comprising a passage (25) formed by sintering with the sintered part (11) of the moulding element and a hole (27) belonging to the non-sintered part (13) of the moulding element and extending the passage, the passage (25) of the vent being isolated from the cavities (21) of the core by a wall (26) of fused metallic powder.

12. Moulding element according to any one of Claims 8 to 11, **characterized in that** the moulding element is formed by assembling at least two portions of moulding elements manufactured beforehand according to any one of Claims 1 to 7.

13. Mould for vulcanising and moulding a tyre, the said mould comprising at least one moulding element according to any one of Claims 8 to 12.
